# EUROPEAN PATENT SPECIFICATION

(11) **EP 4 684 995 B1**
(45) Date of publication and mention of the grant of the patent: **07.10.2026**
(21) Application number: 25187712.2
(22) Date of filing: 07.07.2025
(51) Int. Cl.: B60K 6/48, B60W 10/06, B60W 10/08, B60W 10/26, B60W 20/10, B60W 20/16, B60W 20/13

(54) **METHOD AND SYSTEM FOR BATTERY MANAGEMENT IN A PARALLEL HYBRID VEHICLE**
VERFAHREN UND SYSTEM ZUR BATTERIEVERWALTUNG IN EINEM PARALLEL-HYBRIDFAHRZEUG
PROCÉDÉ ET SYSTÈME DE GESTION DE BATTERIE DANS UN VÉHICULE HYBRIDE PARALLÈLE

(30) Priority: 25.07.2024 IT 202400017356
(43) Date of publication of application: 28.01.2026
(73) Proprietor: FPT Industrial S.p.A., 10156 Torino (IT)
(72) Inventor: DEL GIUDICE, Davide, 10156 Torino (IT); GEHLEN, Manuel, 10156 Torino (IT); HUTTER, Richard, 10156 Torino (IT)
(74) Representative: Fiume, Orazio

(56) References cited:
- EP-A1- 3 604 010
- FR-A1- 3 127 928
- US-A1- 2010 078 234
- US-A1- 2011 118 921
- US-A1- 2016 325 726

## Description

### Field of the invention

The present invention relates to method and system for battery management in a parallel hybrid vehicle, in particular an agricultural or construction vehicle.

### Description of the prior art

The torque split is a function present in all hybrid powertrains. The purpose of this function is to distribute the requested system torque between an internal combustion engine and an electric motor.

A well-known concept for the torque split function is the Equivalent Consumption Minimization Strategy (ECMS). A torque split function designed following this concept, achieves best fuel consumption. However, a fundamental assumption is that most of the electric energy stored in the battery is used to generate propulsion power.

A parallel hybrid vehicle can exploit the electrification for producing driving torque.

In a passenger vehicle, the torque is completely directed to the vehicle propulsion.

In a commercial or industrial vehicle, the torque can be directed to PTO to drive an implement, such as hydraulic pump, or an external electric generator, etc..

Figure 1 of the prior art depicts the general propulsion system layout of a parallel hybrid vehicle comprising of a combustion engine E driving in rotation an electric machine EM and a driveline DL including, for example, a discrete gears device, a differential, wheels, and a mechanical PTO as known.

A mechanical PTO, here is indicated as mPTO, has the task to transfer a rotary motion to a user.

Figure 2 of the prior art discloses a classical ECMS algorithm. It includes a first block "System torque request" where a value of a requested torque Tq_req is acquired.

The value of the requested torque is sent to two blocks "Fuel combustion model" and "Battery + EM model", namely the model of the internal combustion engine and the model of the electric system including the electric machine EM, the battery, but also the electrical converter.

Those modules estimate, respectively, the amount of fuel and the electric power needed to fulfill the value of the torque requested.

Those values are, then, input to a block "Solve optimization problem" arranged to minimize a cost function. Thus, once the values of fuel and electric power are known, they are converted into torque values for the combustion engine and the electric system.

The block "Solve optimization problem" receives as input also the variable *λ* generated by the block "Cost adaptation" on the basis actual battery SoC_act and a reference SOC value SOC_ref, with the purpose to calculate a value for *λ* suitable to keep the deviation of SoC_act from SoC_ref within bounds and avoid battery overcharging or depletion.

Unless specifically excluded in the detailed description that follows, what is described in this chapter is to be considered as an integral part of the detailed description.

EP3604010A1, US2016/0325726A1 and US2011/0118921A1 disclose energy-management strategies for hybrid vehicles, but do not disclose the claimed optimization term coupling the battery power with the power requested by the electric load.

### Summary of the invention

The main object of the present invention is to provide for a parallel hybrid vehicle equipped with an electric PTO, namely a PTO capable to furnish an electric power comparable with the rated power of the electric machine operatively connected to the driveline.

Another object of the present invention is to provide for a method for managing the torque distribution in parallel hybrid vehicle equipped with an electric PTO.

The main principle of the invention is an extension of the basic ECMS, by including the electric power drawn through the electric PTO in the calculation of the fuel-optimal torque-split. With this extension, under most operating conditions, the power drawn by the electric load is fully covered by the electric machine working as a generator, driven by the combustion engine.

The proposed optimization minimizes unnecessary battery usage and therefore contributes to optimal battery lifetime. The proposed optimization is fully retro-compatible with the basic ECMS as used for the prior art. Thus, all its advantageous properties and functionalities remain active during the electric PTO operation.

These and further objects are achieved by means of the attached claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:

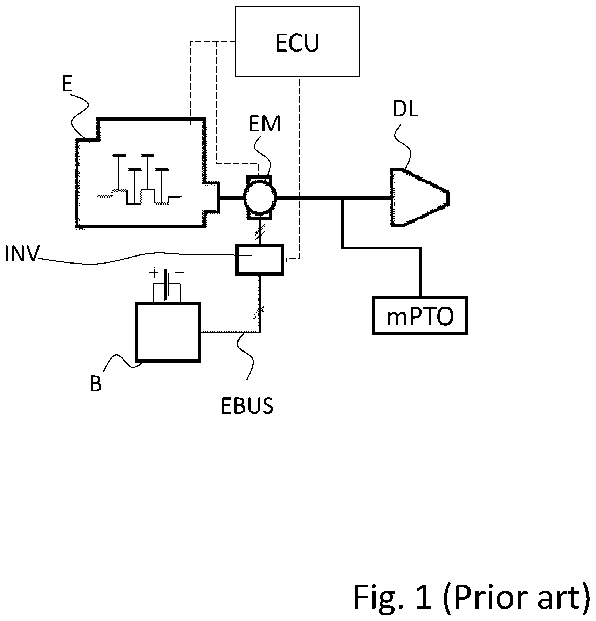

- Fig. 1 discloses a parallel hybrid propulsion system of a vehicle of the prior art provided of a mechanical PTO;

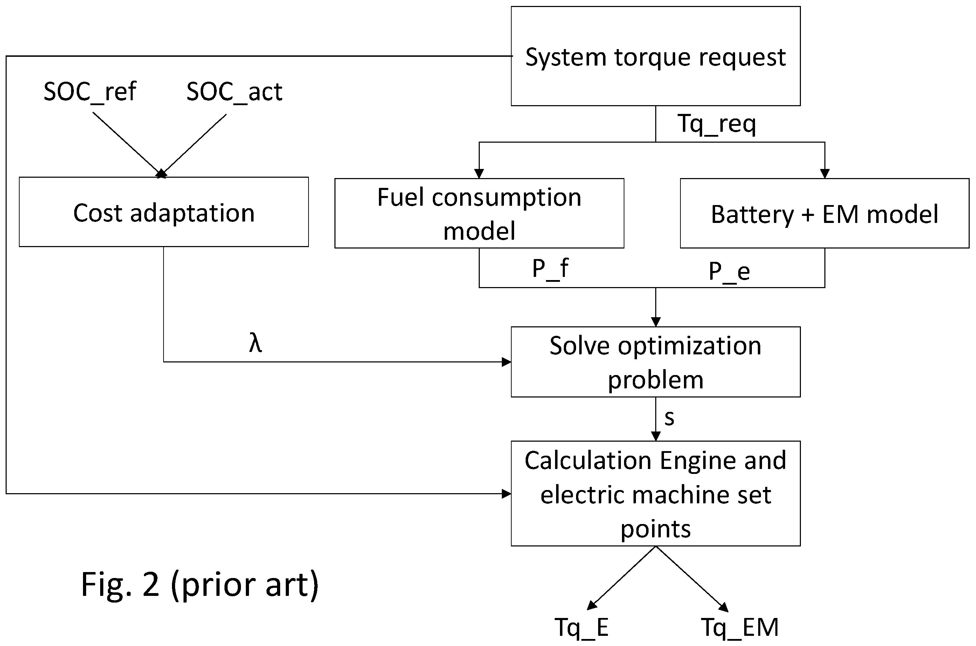

- Fig. 2 discloses the ECMS algorithm of the prior art implemented in a parallel hybrid propulsion system according to Fig. 1;

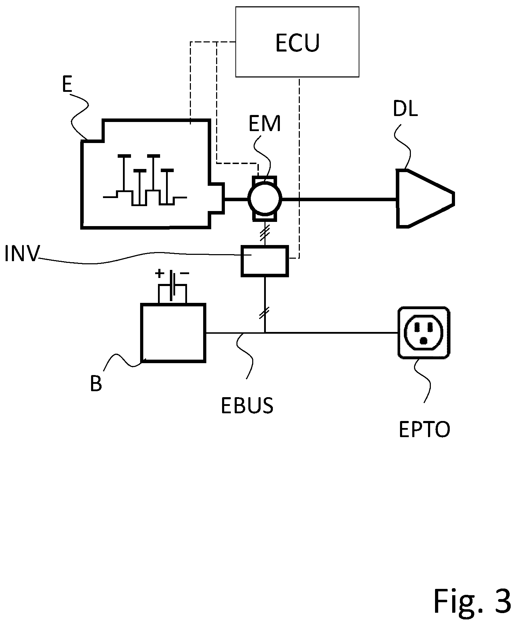

- Fig. 3 discloses a parallel hybrid propulsion system of a vehicle of the prior art provided of an electrical PTO;

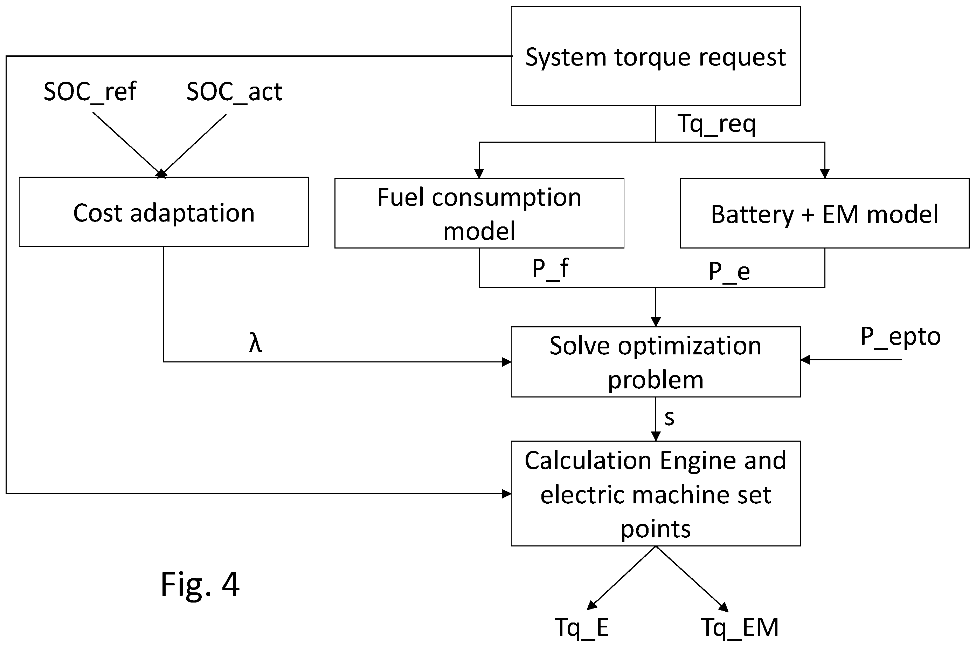

- Fig. 4 discloses the modified ECMS algorithm of the present invention applied to the system of Fig. 3;

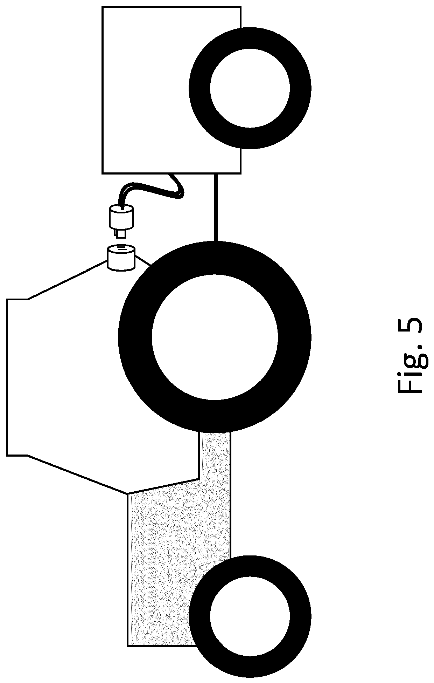

- Fig. 5 discloses a vehicle implementing the hybrid propulsion system modified according to the present invention.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

Fig. 3 discloses a modification of the scheme of Fig. 1 where an electric PTO, hereinafter named as EPTO, connected to the electric bus of the hybrid vehicle.

The electric machine EM has two tasks: Firstly, to recharge the battery storage B by converting mechanical power received from the combustion engine E through an electrical converter INV, generally an inverter, in such a way to generate electric energy when needed.

Secondly, in some operating conditions, the electric machine EM has to supplement the combustion engine E to drive the driveline.

An electric bus EBUS interconnects the converter INV with the battery storage B and an electric power interface, here named as electric PTO or EPTO. The EPTO supplies electrical power to an electrical load.

Preferably the present invention is implemented in an agricultural or construction vehicle, where the electrical loads supplied by the EPTO are relevant and require the same magnitude order of power, for example 40-100%, of the rated power of the internal combustion engine.

For example, in the field of agricultural vehicles, a relevant electric load could be, a baler, a sprayer, a power harrow, or a water pump.

For example, in the field of construction vehicles, a relevant electric load could be, electrically driven, hydraulic pumps.

Thus, the battery of a parallel hybrid vehicle equipped with an EPTO would be discharged every time the electric load is activated until the torque split function increases the cost variable, namely the cost of electricity, in order to use the electric motor more as a generator, rather than as a motor. On the other hand, the battery is likely to be charged always to high SoC after the electric consumer is turned off.

Figure 2 of the prior art can be summarized with the optimization problem expressed as ${min}_{s} \left({P}_{fuel}\left(s\right)+λ⋅{P}_{batt}\left(s\right)\right)$ (1) Where the relative torque split s is the value to be found, while *P_{fuel}* is the chemical power of the fuel used by the combustion engine and *Pbatt* is the power provided by the battery. *Pbatt* can be positive when battery is contributing to the propulsion of the vehicle, while it is negative when the battery is charged. The objective of the optimization problem is to minimize the cost term (*P_{fuel}*(*s*) *+ λ·P_{batt}*(*s*))*.*Once s is found, the torque requested to the combustion engine E is *tq_{E} = tq_{req}*·(1 ***-** s*)*,* while the torque requested to the electric machine is *tq_{EM} = tq_{req}·s.*

The costate variable *λ* is adapted over time depending on the actual battery SoC to achieve charge sustaining operation. The adaption of the costate variable can be done for example using a PI or a PID controller. Using a controller for this kind of task is suggested in the literature, such as in Delprat S, Guerra TM, Rimaux J. "Optimal control of a parallel powertrain: from a global optimization to real-time control strategy." In: Proceedings of the 18th electric vehicle symposium (EVS 15), Bruxelles, 2001.

The adaptation of the costate variable is referred to as "cost adaptation".

According to the present invention in Figure 4, equation (1) is modified by adding the term *µ* · *Pₑₚₜₒ* · |*P_{batt}*(*s*)| such to obtain: ${min}_{s} \left({P}_{fuel}\left(s\right)+λ⋅Pbatt\left(s\right)+μ⋅{P}_{epto}⋅\left|{P}_{batt}\left(s\right)\right|\right)$ (2) Where *Pₑₚᵣₒ* represents the current electric power requested by the electric load and *µ* represents a tunable parameter, discussed below.

The value of the term *Pepto* **·** *Pbatt*(*s*) increases proportionally to the increase of the power exchanged by the battery. Therefore, the optimization of (2) leads to a use of the electric motor as a generator to sustain the electrical power requested by the electric load.

Thus, the battery power exchange, i.e. both discharge and charge, is kept as small as possible.

On the other side, the value of the term *µ* · *Pepto* · *Pbatt (s)* is linearly increasing with the (measured) electric load power *Pepto.* This means in case there is no electric power consumed by the implement, the optimization problem is the same as the one from basic ECMS disclosed in Figure 2.

In particular, when the electric load is connected operatively to the electrical interface EPTO, then *µ* > 0, while, when the electric load is disconnected, then *Pepto*Pbatt* is zero independently of the value of *µ*.

The additional parameter *µ* is calibrated according to the desired behaviour. With *µ* = 0 the torque split is equal to the basic ECMS of Figure 2 and therefore the battery SoC drops as soon as the electric load is activated. Choosing *µ* > 0 lowers this drop in SoC but can lead to worse fuel consumption.

Therefore, the value of *µ* has to be chosen as a trade-off, mainly on the basis of the battery capacity and the electric energy needed to supply the electric load.

The present invention is implemented in the control unit managing the hybrid system.

Therefore, the control unit is configured to receive the following inputs:
- SOC_ref,
- Soc_act,
- Tg_req, and
- P_epto,
and calculating the value of the torque Tq_E requested to the combustion engine E and the value of the torque requested to the electric machine Tq_EM, such that the sum of Tq_E and Tq_EM fulfils the torque requested Tq_req.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

## Claims

1. Method for battery management of a parallel hybrid vehicle, wherein the hybrid vehicle includes
- a combustion engine (E),
- a driveline (DL) operatively connected to a combustion engine crankshaft,
- an electrical machine (EM) operatively connected to said combustion engine crankshaft,
- an electrical storage means (B),
wherein both the electrical machine (EM) and the driveline are arranged, at least in an operating condition, to be driven by the combustion engine and wherein the electrical storage means (B) and the electrical machine are arranged to electrically supply an electrical interface (EPTO) to power an electric load operatively connected to the parallel hybrid vehicle, the method including the step of solving an optimization problem for minimizing fuel consumption, including a first term proportional to a product of a first value of a power exchanged by the electrical storage means (*Pbatt*) and a second value of a power requested by the electric load (*Pepto*).

2. Method according to claim 1, wherein said first term includes a tunable parameter (*µ*) multiplying said first and second values, wherein said tunable parameter is strictly greater than 0.

3. Method according to any one of the previous claims, wherein said optimization problem is based on Equivalent Consumption Minimization Strategy (ECMS) leading to a fuel consumption minimization, wherein said first term leads, at the same time, to a battery state of charge (Soc) variation minimization.

4. Method according to any one of the previous claims 2 or 3, wherein said optimization problem includes the following cost terms
- second term: *P_{fuel}*(*s*) representing a value of a chemical power provided by the fuel,
- third term: λ · Pbatt(s) representing a value of a power exchanged by the electrical storage means (B) and λ is a costate variable,
So that an overall optimization problem is represented by the following expression: ${min}_{s} \left({P}_{fuel}\left(s\right)+λ⋅Pbatt\left(s\right)+μ⋅{P}_{epto}⋅\left|{P}_{batt}\left(s\right)\right|\right)$ Including said first term.

5. Control unit (ECU) arranged to control a hybrid propulsion system of a parallel hybrid vehicle, the hybrid propulsion system including
- a combustion engine (E),
- a driveline (DL) operatively connected to a combustion engine crankshaft,
- an electrical machine (EM) operatively connected to said combustion engine crankshaft,
- an electrical storage means (B),
wherein both the electrical machine (EM) and the driveline are arranged, at least in an operating condition, to be driven by the combustion engine and wherein the electrical storage means (B) and the electrical machine are arranged to electrically supply an electrical interface (EPTO) to power an electric load operatively connected to the parallel hybrid vehicle,
the control unit being configured to implement a solver module for minimizing fuel consumption, including a first term proportional to a product of a first value of a power exchanged by the electrical storage means (*Pbatt*) and a second value of a power requested by the electric load (*Pepto*).

6. A computer program comprising instructions to cause the device of claim 5 to execute the steps of any one of the method of claims 1 - 4.

7. A computer-readable medium having stored thereon the computer program of claim 6.

8. A terrestrial parallel hybrid vehicle comprising a hybrid propulsion system and a control unit according to claim 5.

9. Vehicle according to claim 8, wherein the vehicle is an agricultural or construction one.

10. Vehicle according to claim 9, wherein an electrical interface (EPTO) is arranged to supply an electrical load of the same magnitude order of power of the combustion engine (E).

## Patentansprüche

1. Verfahren zum Batteriemanagement eines Parallelhybridfahrzeugs, wobei das Hybridfahrzeug Folgendes umfasst
- einen Verbrennungsmotor (E),
- einen Antriebsstrang (DL), der betrieblich mit der Kurbelwelle eines Verbrennungsmotors verbunden ist,
- eine elektrische Maschine (EM), die betrieblich mit der Kurbelwelle des Verbrennungsmotors verbunden ist,
- einen elektrisches Speichermittel (B),
wobei sowohl die elektrische Maschine (EM) als auch der Antriebsstrang zumindest in einem Betriebszustand so angeordnet sind, dass sie vom Verbrennungsmotor angetrieben werden, und wobei die elektrischen Speichermittel (B) und die elektrische Maschine so angeordnet sind, dass sie eine elektrische Schnittstelle (EPTO) elektrisch versorgen, um eine elektrische Last zu versorgen, die betrieblich mit dem Parallelhybridfahrzeug verbunden ist, wobei das Verfahren den Schritt der Lösung eines Optimierungsproblems zur Minimierung des Kraftstoffverbrauchs einschließlich eines ersten Terms umfasst, der proportional zum Produkt eines ersten Wertes einer von den elektrischen Speichermitteln ausgetauschten Leistung (*Pbatt*) und eines zweiten Wertes einer von der elektrischen Last angeforderten Leistung (*Pepto*) ist.

2. Verfahren nach Anspruch 1, wobei der erste Term einen einstellbaren Parameter (*µ*) enthält, der die ersten und zweiten Werte multipliziert, wobei der einstellbare Parameter strikt größer als 0 ist.

3. Verfahren nach einem der vorhergehenden Ansprüche, wobei das Optimierungsproblem auf der Equivalent Consumption Minimization Strategy (ECMS) basiert, die zu einer Minimierung des Kraftstoffverbrauchs führt, wobei der erste Term gleichzeitig zu einer Minimierung der Variation des Ladezustands (Soc) der Batterie führt.

4. Verfahren nach einem der vorhergehenden Ansprüche 2 oder 3, wobei das Optimierungsproblem die folgenden Kostenterme umfasst
- zweiten Term: *P_{fuel}(s)* stellt einen Wert einer vom Brennstoff bereitgestellten chemischen Leistung dar,
- dritten Term: λ·Pbatt(s) stellt einen Wert der von den elektrischen Speichermitteln (B) ausgetauschten Leistung dar, wobei λ eine Kovariable ist, so dass ein Gesamtoptimierungsproblem durch folgenden Ausdruck dargestellt wird ${min}_{s} \left({P}_{fuel}\left(s\right)+λ . Pbatt\left(s\right)+μ . {P}_{epto}.\left|{P}_{batt}\left(s\right)\right|\right)$ einschließlich des ersten Terms.

5. Steuereinheit (ECU) zur Steuerung eines Hybridantriebssystems eines Parallelhybridfahrzeugs, wobei das Hybridantriebssystem Folgendes umfasst
- einen Verbrennungsmotor (E),
- einen Antriebsstrang (DL), die funktionell mit der Kurbelwelle eines Verbrennungsmotors verbunden ist,
- eine elektrische Maschine (EM), die mit der Kurbelwelle des Verbrennungsmotors betrieblich verbunden ist,
- einen elektrischen Speichermittel (B),
wobei sowohl die elektrische Maschine (EM) als auch der Antriebsstrang zumindest im Betriebszustand so angeordnet sind, dass sie vom Verbrennungsmotor angetrieben werden, und wobei der elektrische Speichermittel (B) und die elektrische Maschine so angeordnet sind, dass sie eine elektrische Schnittstelle (EPTO) elektrisch versorgen, um eine elektrische Last zu versorgen, die betrieblich mit dem Parallelhybridfahrzeug verbunden ist,
wobei die Steuereinheit so konfiguriert ist, dass sie ein Lösungsmodul zur Minimierung des Kraftstoffverbrauchs einschließlich eines ersten Terms implementiert, der proportional zum Produkt aus einem ersten Wert der von den elektrischen Speichermitteln ausgetauschten Leistung (*Pbatt*) und einem zweiten Wert der von der elektrischen Last angeforderten Leistung (*Pepto*) ist.

6. Computerprogramm mit Anweisungen, die die Vorrichtung nach Anspruch 5 veranlassen, die Schritte eines der Verfahren nach den Ansprüchen 1 bis 4 auszuführen.

7. Computerlesbarer Datenträger, auf dem das Computerprogramm nach Anspruch 6 gespeichert ist.

8. Terrestrisches Parallelhybridfahrzeug mit einem Hybridantriebssystem und einer Steuereinheit nach Anspruch 5.

9. Fahrzeug nach Anspruch 8, wobei es sich um ein landwirtschaftliches oder Baufahrzeug handelt.

10. Fahrzeug nach Anspruch 9, wobei eine elektrische Schnittstelle (EPTO) so ausgelegt ist, dass sie eine elektrische Last in dergleichen Größenordnung wie die Leistung des Verbrennungsmotors (E) versorgt.

## Revendications

1. Procédé de gestion de batterie dans un véhicule hybride parallèle, dans lequel le véhicule hybride comprend
- un moteur à combustion (E),
- une transmission (DL) reliée fonctionnellement a un vilebrequin d'un moteur à combustion,
- une machine électrique (EM) reliée fonctionnellement audit vilebrequin du moteur à combustion,
- un moyen de stockage électrique (B),
dans lequel la machine électrique (EM) et la transmission sont agencées, au moins dans un état de fonctionnement, pour être entraînées par le moteur à combustion et dans lequel le moyen de stockage électrique (B) et la machine électrique sont agencés pour alimenter électriquement une interface électrique (EPTO) afin d'alimenter une charge électrique connectée fonctionnellement au véhicule hybride parallèle, le procédé comprenant l'étape de résolution d'un problème d'optimisation pour minimiser une consommation de carburant, comprenant un premier terme proportionnel au produit d'une première valeur d'une puissance échangée par le moyen de stockage électrique (*Pbatt*) et d'une deuxième valeur d'une puissance demandée par la charge électrique (*Pepto*).

2. Procédé selon la revendication 1, dans lequel le premier terme comprend un paramètre réglable (*µ*) multipliant lesdites première et deuxième valeurs, dans lequel ledit paramètre réglable est strictement supérieur à 0.

3. Procédé selon l'une quelconque des revendications précédentes, dans lequel ledit problème d'optimisation est basé sur une stratégie de minimisation de la consommation équivalente (ECMS), conduisant à une minimisation de la consommation de carburant, dans lequel ledit premier terme conduit, en même temps, à une minimisation de la variation de l'état de charge (Soc) de la batterie.

4. Procédé selon l'une quelconque des revendications 2 ou 3 précédentes, dans lequel ledit problème d'optimisation comprend les termes de coût suivants
- deuxième terme: *P_{fuel}(s)* représentant une valeur d'une puissance chimique fournie par le carburant,
- troisième terme: *λ·* Pbatt(s) représentant une valeur d'une puissance échangée par le moyen de stockage électrique (B) et λ est une variable dans le même état, ainsi qu'un problème d'optimisation global est représenté par l'expression suivante : ${min}_{s} \left({P}_{fuel}\left(s\right)+λ . Pbatt\left(s\right)+μ . {P}_{epto}.\left|{P}_{batt}\left(s\right)\right|\right)$ incluant ledit premier terme.

5. Unité de commande (ECU) arrangée pour commander un système de propulsion hybride d'un véhicule hybride parallèle, le système de propulsion hybride comprenant
- un moteur à combustion (E)
- une transmission (DL) reliée fonctionnellement à un vilebrequin d'un moteur à combustion,
- une machine électrique (EM) reliée fonctionnellement audit vilebrequin du moteur à combustion,
- un moyen de stockage électrique (B),
dans laquelle la machine électrique (EM) et la transmission sont agencées, au moins dans un état de fonctionnement, pour être entraînées par le moteur à combustion et dans laquelle le moyen de stockage électrique (B) et la machine électrique sont agencés pour alimenter électriquement une interface électrique (EPTO), afin d'alimenter une charge électrique connectée fonctionnellement au véhicule hybride parallèle,
l'unité de commande étant configurée pour mettre en œuvre un module de résolution pour minimiser la consommation du carburant, comprenant un premier terme proportionnel à un produit d'une première valeur d'une puissance échangée par le moyen de stockage électrique (*Pbatt*) et d'une deuxième valeur d'une puissance demandée par la charge électrique (*Pepto*).

6. Programme informatique comprenant des instructions pour faire exécuter par le dispositif de la revendication 5 les étapes de l'une quelconque du procédé selon les revendications 1 à 4.

7. Support lisible par ordinateur sur lequel est stocké le programme informatique selon la revendication 6.

8. Véhicule hybride parallèle terrestre, comprenant un système de propulsion hybride et une unité de commande selon la revendication 5.

9. Véhicule selon la revendication 8, dans lequel le véhicule est un véhicule agricole ou de construction.

10. Véhicule selon la revendication 9, dans lequel une interface électrique (EPTO) est agencée pour fournir une charge électrique du même ordre de grandeur que la puissance du moteur à combustion (E).
